# EUROPÄISCHE PATENTSCHRIFT

(11) **EP 2 233 747 B1**
(45) Veröffentlichungstag und Bekanntmachung des Hinweises auf die Patenterteilung: **13.09.2017**
(21) Anmeldenummer: 09003441.4
(22) Anmeldetag: 10.03.2009
(51) Int. Cl.: F04D 29/044

(54) **Mehrstufiges Kreiselpumpenaggregat**
Multi stage motor pump unit
Groupe motopompe centrifuge à plusieurs étages

(43) Veröffentlichungstag der Anmeldung: 29.09.2010
(73) Patentinhaber: Grundfos Management A/S, 8850 Bjerringbro (DK)
(72) Erfinder: Svendsen, Karl-Henrik, 8960 Randers SØ (DE)
(74) Vertreter: Vollmann, Heiko

(56) Entgegenhaltungen:
- DE-A1- 4 223 544
- DE-A1- 10 323 169
- DE-A1-102006 021 446
- DE-U1- 29 606 135
- FR-A- 2 288 888

## Beschreibung

Die Erfindung betrifft ein mehrstufiges Kreiselpumpenaggregat mit den im Oberbegriff des Anspruchs 1 angegebenen Merkmalen.

Mehrstufige Kreiselpumpenaggregate dieser Art zählen in unterschiedlichsten Ausführungen zum Stand der Technik. Es wird in diesem Zusammenhang nur beispielhaft auf die von der Firma Grundfos unter der Typenbezeichnung CH bzw. CHN hergestellten und vertriebenen Aggregate verwiesen, zum Beispiel das Aggregat des Typs CHN2-50 mit Antriebsmotor MG71. Es handelt sich bei diesen mehrstufigen Kreiselpumpenaggregaten insbesondere um solche, deren Welle liegend angeordnet ist, das heißt bei üblicher Ausrichtung horizontal.

Die Pumpenaggregate der vorgenannten Baureihe haben sich im praktischen Einsatz bestens bewährt. Sie weisen ein Motorgehäuse mit einer darin drehbar gelagerten Motorwelle auf, die einen Rotor trägt, sowie ein Pumpengehäuse mit einer drehbar gelagerten Pumpenwelle, auf welche mehrere Laufräder drehfest angeordnet sind. Das Motorgehäuse ist fest mit dem Pumpengehäuse verbunden und weist typischerweise ein gemeinsames Bauteil auf, den Lagerträger, der das pumpenseitige Ende der Motorwelle und das in diesem Bereich eingegliederte motorseitige Ende der Pumpenwelle radial abstützt. Dabei ist das motorseitige Ende der Pumpenwelle innerhalb eines Sacklochs am pumpenseitigen Ende der Motorwelle festgelegt, und zwar durch eine Presspassung, die üblicherweise durch thermisches Fügen, das heißt durch Fügen nach Erwärmen der Motorwelle und Abkühlen der Pumpenwelle und/oder durch Aufbringen entsprechend hoher Kräfte in Achsrichtung der Wellen erfolgt. Dies ist grundsätzlich unproblematisch, hat jedoch den Nachteil, dass die Wellenverbindung typischerweise vor Fertigmontage des Motors erfolgen muss, da die gesonderte Erwärmung der Motorwelle sonst nicht möglich ist. Im Übrigen ist der Motor für die Aufbringung derart hoher axialer Kräfte, wie sie zum Fügen einer Presspassung erforderlich sind, üblicherweise nicht ausgelegt. Es muss also bei der Motorfertigung bereits festgelegt werden, welche Pumpe, das heißt welche Welle für welche Anzahl von Laufrädern zum Einsatz kommt. Darüber hinaus ist die axiale Baulänge dieser bekannten Konstruktion im Bereich Lager/Wellenverbindung vergleichsweise groß, da die Presspassung außerhalb des Lagerbereichs angeordnet ist, um diesen nicht negativ zu beeinflussen.

Die Druckschrift FR 2 288 888 beschreibt eine einstufige Pumpe mit einer Pumpenwelle, die mit ihrem gewindefreien Endabschnitt in einen entsprechenden Endabschnitt einer Sacklochbohrung einer Motorwelle eingeführt wird, wobei die Pumpenwelle hinter diesem gewindefreien Endabschnitt in Richtung zum Pumpenlaufrad ein Außengewinde aufweist, das mit einem Innengewinde der Motorwelle eingreift. Vor diesem Hintergrund liegt der Erfindung die Aufgabe zu Grunde, ein gattungsgemäßes mehrstufiges Kreiselpumpenaggregat so auszubilden, dass die Verbindung zwischen Motorwelle und Pumpenwelle auch nach Montage des Motors erfolgen kann und die darüber hinaus eine in Axialrichtung kompakt bauende Konstruktion ermöglicht.

Diese Aufgabe wird gemäß der Erfindung durch ein Kreiselpumpenaggregat mit den im Anspruch 1 angegebenen Merkmalen gelöst. Vorteilhafte Ausgestaltungen der Erfindung sind in den Unteransprüchen, der nachfolgenden Beschreibung und der Zeichnung angegeben.

Bei dem erfindungsgemäßen Kreiselpumpenaggregat ist die Pumpenwelle an oder nahe ihrem motorseitigen Ende mit einem Außengewinde versehen, das in ein Innengewinde des Sacklochs am pumpenseitigen Ende der Motorwelle eingreift. Mit Abstand in Richtung zum Laufrad davon ist eine erste Passung sowie davon beabstandet eine zweite Passung zwischen Pumpenwelle und Sackloch vorgesehen. Durch die Gewindeverbindung zwischen den beiden Wellen ist eine Fügung der Passungen auch nach Montage des Motors möglich, da bei Anbringung geeigneter Formschlussmittel auf den zu verbindenden Wellen, die Axialkräfte ausschließlich durch das Fügen der Gewindeabschnitte zwischen Pumpenwelle und Motorwelle aufgebracht werden, also keinerlei axiale Belastung des Motors erfolgt. Durch die Teilung der Passung in zwei voneinander beabstandete Teilpassungen kann zudem sichergestellt werden, dass etwaige Materialaufweitungen der Motorwelle in Bereiche außerhalb des Lagers gelegt werden können. Darüber hinaus sind die Spannungsverteilungen innerhalb der Wellen aufgrund der zwei voneinander beabstandeten Passungen wesentlich günstiger als bei einer einzigen Passung, die eine größere Länge aufweisen muss. Schließlich kann durch diese Aufteilung zumindest eine Passung in den Bereich des Lagers gelegt werden, wodurch die axiale Baulänge verringert werden kann.

Grundgedanke der vorliegenden Erfindung ist es also, die Konstruktion der Wellenverbindung so auszulegen, dass die vergleichsweise hohen Fügekräfte in Achsrichtung beim Fügen der Presspassung, welche den Motor nach erfolgter Montage unzulässig belasten würden, durch innere Kräfte aufzubringen, nämlich durch die beim Fügen des Gewindes entstehenden Zugkräfte, die durch entsprechendes Aufbringen eines Drehmoments zwischen den Wellen entstehen. Ein weiterer wesentlicher Gedanke ist die sonst übliche, eine Presspassung durch zwei voneinander beabstandete Passungen zu ersetzen, die dann naturgemäß axial kürzer ausgestaltet sein können und an geeigneter Stelle angeordnet werden können, ohne dass hierfür gesonderte Wellenabschnitte vorzusehen sind, die sonst ohne konstruktive Funktion sind.

Besonders vorteilhaft ist es, wenn gemäß einer Weiterbildung der Erfindung die erste Passung eine Übergangspassung ist. Erste Passung im Sinne der vorliegenden Erfindung ist die, die dem Motor am nächsten ist. Um die erforderlichen Kräfte übertragen zu können, ist dann vorteilhaft die zweite Passung eine Presspassung. Diese Abstufung in Übergangs- und Presspassung ist besonders vorteilhaft, da innerhalb des Sacklochs der Motorwelle die aufgrund der Passungen entstehenden Spannungen so abgestuft aufgebracht werden, dass sie am Ende der Motorwelle am höchsten sind und nicht in einem mittleren, insbesondere Lagerbereich.

Zweckmäßigerweise ist am motorseitigen Ende der Pumpenwelle ein Führungszapfen vorgesehen, der mit Spiel in einer entsprechend am Boden des Sacklochs ausgebildeten Ausnehmung sitzt. Ein solcher Führungszapfen sorgt für eine sichere Führung beim Fügen der Wellen und verhindert eine Beschädigung des Gewindes, wenn die Wellen ineinander gesteckt werden, bevor die Verschraubung erfolgt.

Für den Fügevorgang vorteilhaft ist es weiterhin, dass die Pumpenwelle von ihrem motorseitigen Außengewinde zu dem Abschnitt hin, welcher Teil der ersten Passung bildet, konisch aufweitend ausgebildet ist. Hierdurch erfolgt eine selbsttätige Zentrierung während des Fügevorgangs, sodass sich die Kräfte über den gesamten Umfang gleichmäßig verteilen können.

Besonders vorteilhaft ist es, wenn die Pumpenwelle im Bereich zwischen den Abschnitten für die erste und die zweite Passung einen geringeren Durchmesser als in den Passungsabschnitten aufweist. Auch dies unterstützt den Fügevorgang günstig insbesondere dann, wenn beide Passungen etwa den gleichen Nenndurchmesser aufweisen.

Um die Fügekräfte insbesondere für die zweite Passung, die vorteilhaft als Presspassung ausgebildet ist, in definierten Grenzen zu halten, ist gemäß einer Weiterbildung der Erfindung vorgesehen, die zweite Passung mit umlaufenden Schmiernuten zu versehen, welche den Fügevorgang insbesondere im Bereich der Presspassung erleichtern. Die Schmiernuten werden vor dem Fügen mit einem geeigneten Gleitmittel gefüllt und verhindern insbesondere die Gefahr von Kaltverschweißungen, wie sie beim Fügen unter hohen Kräften insbesondere bei Edelstählen gelegentlich auftreten.

Die erste Passung, die bevorzugt eine Übergangspassung ist, wird gemäß einer Weiterbildung der Erfindung zweckmäßigerweise dort angeordnet, wo die Motorwelle vom Lager umgeben ist, und zwar vorzugsweise mittig zum Lager, also dort wo sich die Wälzkörper abstützen, wenn ein solches Wälzlager eingesetzt wird, was in diesem Bereich üblich ist.

Die zweite Passung, bei der es sich vorzugsweise um die Presspassung handelt, ist vorteilhaft jenseits des Lagers, und zwar zur Pumpenseite hin nahe dem Ende der Motorwelle angeordnet. Diese Anordnung hat den Vorteil, dass aufgrund der Presspassung keine Einwirkungen auf das Lager zu befürchten sind und andererseits die Verbindung so weit wie möglich pumpenseitig angeordnet ist, was sowohl im Hinblick auf die Lagerung der Motorwelle als auch insbesondere im Hinblick auf die sich ergebenden Momentenbelastungen der Pumpenwelle im Hinblick auf die Lagerung und die Passungsverbindung selbst besonders günstig ist.

Um zuverlässig zu verhindern, dass etwaige Förderflüssigkeit, die längs der Pumpenwelle über die Gleitringdichtung aus dem Pumpengehäuse austritt, über die Motorwelle in den Motor gelangt, ist gemäß einer Weiterbildung der Erfindung vor dem pumpenseitigen Ende der Motorwelle auf der Pumpenwelle ein Schleuderring angeordnet, der die Pumpenwelle dicht umgreift und innerhalb eines Freiraums des Lagerträgers angeordnet ist, der über einen unten anschließenden Kanal mit der Umgebung leitungsverbunden ist. Unten im Sinne der Erfindung bedeutet in Einbaulage, also dort, wo die Flüssigkeit schwerkraftbedingt natürlich abfließt. Durch einen solchen Schleuderring wird etwaige längs der Welle langlaufende Flüssigkeit auf den Schleuderring geleitet, der bei Drehung der Welle aufgrund der Zentrifugalkraft die Flüssigkeit nach außen leitet, wo sie dann schwerkraftbedingt über den Freiraum und den Kanal abgeführt wird.

Gemäß einer Weiterbildung der Erfindung weist der Schleuderring einen h-förmigen Querschnitt auf und ist mittels eines am pumpenseitigen Ende der Motorwelle gebildeten Wulstes formschlüssig rastend gehalten. Ein solcher Wulst kann in einfacher Weise durch Einstechen einer Nut im Endbereich der Motorwelle gebildet werden. Der elastische Schleuderring wird über den Wulst gestülpt und verrastet dann innerhalb der Nut, durch die er dann in axialer Richtung fixiert ist, wohingegen seine dichtende Anlage mit dem anderen Schenkel an der Pumpenwelle erfolgt. Hierzu ist der Schleuderring aus einem elastischen Material auszubilden, vorteilhaft aus Kunststoff. Die Anordnung gegenüber der Pumpenwelle ist so, dass dieser vorgespannt ist, sodass auch über lange Zeit eine dichte Anlage an der Pumpenwelle gewährleistet ist.

Um weitere Sicherheit gegen eindringende Flüssigkeit in den Motor zu gewährleisten, ist gemäß einer Weiterbildung der Erfindung im Lagerträger zwischen Lager und Schleuderring ein feststehender Dichtring vorgesehen, der radial gegenüber dem Lagerträger mittels eines O-Rings abgedichtet ist und der vorgespannt dichtend an der axialen Seite des mit der Welle mitdrehenden inneren Lagerrings des Wälzlagers läuft, und zwar auf der der Pumpe zugewandten Seite. Da der Lagerring eines Wälzlagers typischerweise oberflächenbearbeitet ausgebildet ist, bietet sich diese Fläche zur Bildung einer zusätzlichen Dichtfläche an, da herstellerseitig keine gesonderte weitere Bearbeitung erforderlich ist. Um etwaige in diesen Bereich gelangende Flüssigkeit abzuführen ist auch dieser feststehende Dichtring vorteilhaft innerhalb eines Freiraums angeordnet, der mit der Umgebung leitungsverbunden ist, zweckmäßigerweise über den selben Kanal, über den auch der Schleuderring mit der Umgebung, also mit der das Pumpenaggregat umgebenden Umgebung verbunden ist.

Die Erfindung ist nachfolgend anhand eines in der Zeichnung dargestellten Ausführungsbeispiels näher erläutert. Es zeigen:

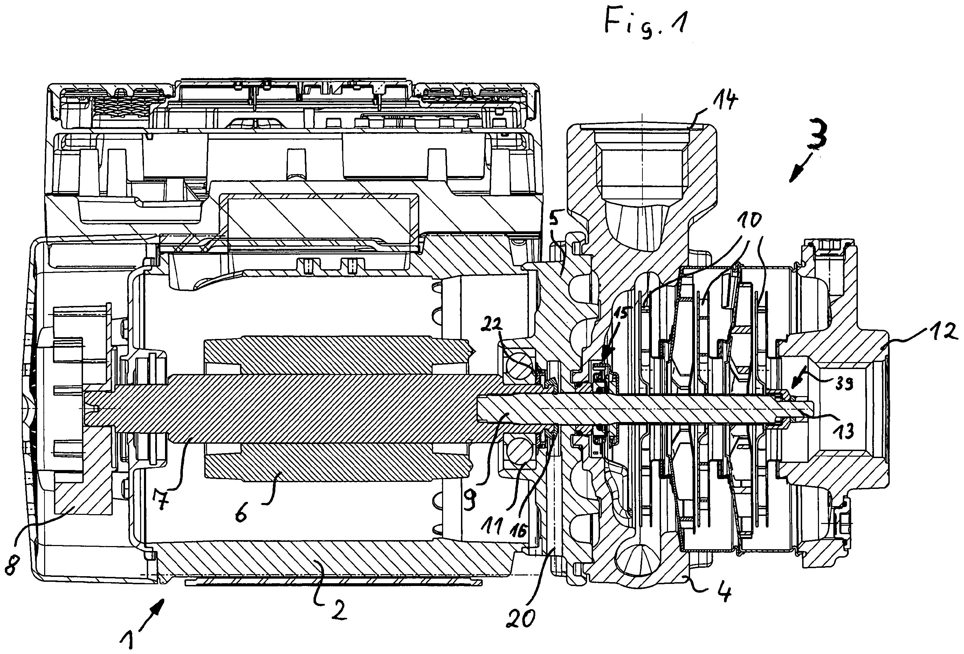

- Fig. 1: in stark vereinfachter, schematischer Darstellung einen Längsschnitt durch ein dreistufiges Pumpenaggregat gemäß der Erfindung,

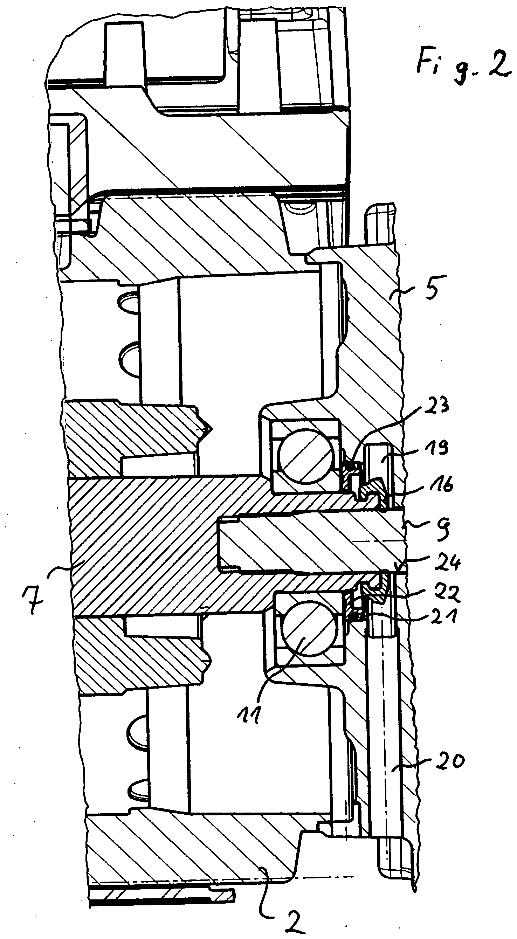

- Fig. 2: in vergrößerter Schnittdarstellung den Bereich des Lagerträgers der Fig. 1,
- Fig. 3: in stark vereinfachter, schematischer Schnittdarstellung ein Lager, ein pumpenseitiges Ende der Motorwelle und ein motorseitiges Ende der Pumpenwelle,
- Fig. 4: den motorseitigen Teil der Pumpenwelle im Längsschnitt,
- Fig. 5: die Pumpenwelle in Seitenansicht,
- Fig. 6: einen Schnitt längs der Schnittlinie A - A in Fig. 5 und
- Fig. 7: eine perspektivische Darstellung der Pumpenwelle.

Das anhand der Figuren dargestellte Pumpenaggregat weist einen Motor 1 mit einem Motorgehäuse 2 und eine Pumpe 3 mit einem Pumpengehäuse 4 auf. Motorgehäuse 2 und Pumpengehäuse 4 sind über einen Lagerträger 5 miteinander verbunden. Der Lagerträger 5 kann je nach Ausführung Teil des Motorgehäuses 2 oder Teil des Pumpengehäuses 4 oder Teil von beiden bilden.

Innerhalb des Motorgehäuses 2 ist eine einen Rotor 6 tragende Motorwelle 7 angeordnet, an deren einem Ende ein Lüfterrad 8 befestigt ist und an deren anderem Ende eine Pumpenwelle 9 anschließt, die innerhalb des Pumpengehäuses 4 gelagert ist und die in der dargestellten Ausführungsform drei Laufräder 10 trägt. Die Motorwelle 7 ist pumpenseitig, also dort, wo die Pumpenwelle 9 mit der Motorwelle 7 drehfest verbunden ist, mittels eines Wälzlagers 11 in Form eines Kugellagers gelagert, das im Lagerträger 5 angeordnet ist.

An der freien Stirnseite des Pumpengehäuses 4 ist ein Sauganschluss 12 der Pumpe vorgesehen, der koaxial zur Drehachse 13 der Wellen 7 und 9 angeordnet ist. Die Pumpe 3 weist einen Druckanschluss 14 auf, der radial nach oben abgeht und mit dem Ausgang der dritten Pumpenstufe leitend verbunden ist. Am motorseitigen Ende des Pumpengehäuses 4 ist eine Gleitringdichtung 15 vorgesehen. Weitere Dichtmittel sind im Bereich des Lagerträgers 5 vorgesehen.

So ist ein im Querschnitt h-förmiger Schleuderring 16 am motorseitigen Ende der Pumpenwelle 9 dichtend angebracht. Der Schleuderring 16 ist aus elastischem Kunststoffmaterial gebildet und übergreift einen endseitigen Wulst 17, der durch eine Nut 18 nahe dem pumpenseitigen Ende in der Motorwelle 7 gebildet ist. Der Schleuderring 16 ist über den Wulst 17 übergestülpt und somit formschlüssig rastend mit dem kurzen Schenkel seines Querschnitts in der Nut 18 angeordnet. Der lange Schenkel liegt mit seiner Innenseite dichtend an der Pumpenwelle 9 an. Der Innenbereich ist im Bereich des langen Schenkels, also dort, wo er zur Pumpe gerichtet ist, vorgespannt, sodass er dichtend an der Pumpenwelle 9 anliegt. Er liegt innerhalb eines Freiraums 19 des Lagerträgers 5, der über einen nach unten führenden Kanal 20 mit der Außenumgebung verbunden ist. Im Betrieb gelangt etwaige längs der Pumpenwelle 9 durch die Gleitringdichtung 15 dringende Flüssigkeit auf den Schleuderring 16, der diese mitnimmt und durch Zentrifugalkraft in den Freiraum 19 schleudert, von wo sie über den Kanal 20 nach außen abgeführt wird.

In Richtung zum Motor 1 ist hinter dem Freiraum 19 ein weiterer Freiraum 21 geringeren Durchmessers angeordnet, der mit dem Freiraum 19 verbunden ist und der zur Aufnahme eines feststehenden Dichtrings 22 vorgesehen ist, der innerhalb der radialen Umfangsfläche des Freiraums 21 festgelegt ist und mittels eines O-Rings 23 gegenüber dem Lagerträger 5 abgedichtet ist. Dieser feststehende Dichtring 22 weist einen radial nach innen gerichteten Abschnitt auf, mit dem dieser an der axialen Seite des mit der Welle 7 mitdrehenden inneren Lagerrings des Kugellagers 11 anliegt und somit eine weitere Barriere gegen Flüssigkeit bildet.

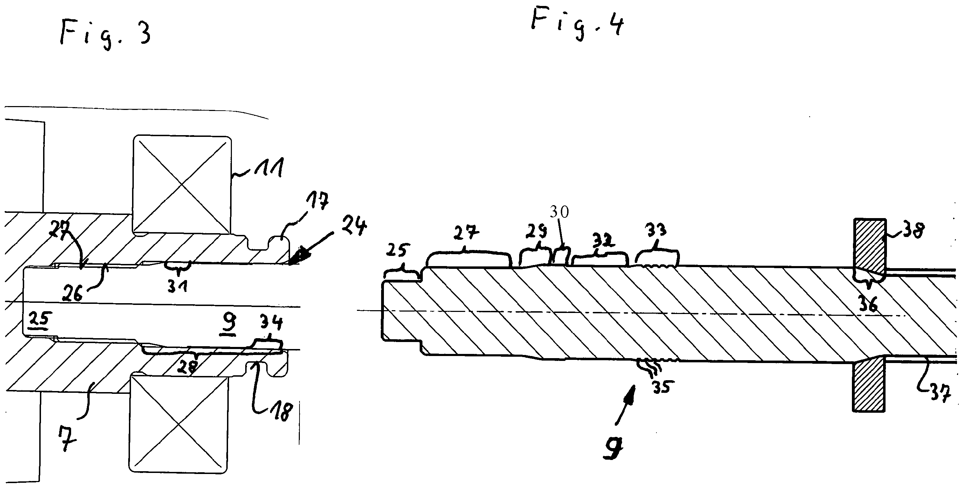

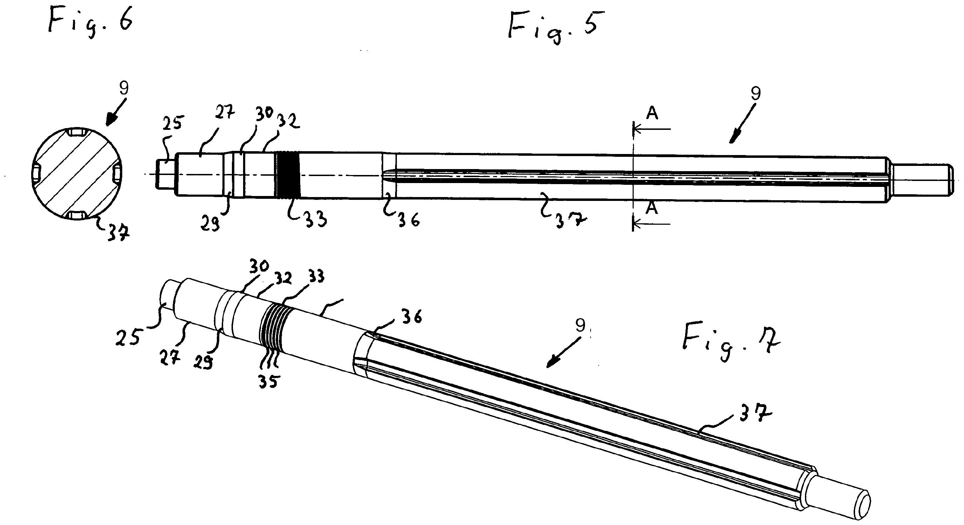

Anhand der Figuren 3 bis 7 ist die Pumpenwelle 9 sowie deren Verbindung mit der Motorwelle 7 im Einzelnen dargestellt. Zur Aufnahme des motorseitigen Endes der Pumpenwelle 7, weist die Motorwelle an ihrem pumpenseitigen Ende eines Sacklochs 24 auf. Dieses Sackloch 24 ist abgestuft ausgebildet und weist nahe ihrem Boden einen zylindrischen Abschnitt auf, der zur Aufnahme eines Führungszapfens 25 bestimmt ist, der am motorseitigen Ende der Pumpenwelle 9 angeordnet ist. Dieser Führungszapfen 25 sitzt in Einbaulage (Fig. 3) mit Spiel innerhalb der bodenseitigen Ausnehmung des Sacklochs 24. Hieran schließt sich ein demgegenüber aufgeweiteter Abschnitt 26 im Sackloch an, der mit einem Innengewinde versehen ist, das zur Aufnahme eines Außengewindes 27 der Pumpenwelle 9 vorgesehen und bestimmt ist. An den Gewindeabschnitt 26 in dem Sackloch 24 schließt sich in Richtung zur Pumpe wiederum aufgeweitet ein zylindrischer Abschnitt 28 an, der bis zum pumpenseitigen Ende der Motorwelle 7 fortgesetzt ist.

Wellenseitig schließt sich in Richtung der Laufräder 10 gesehen an den mit Außengewinde 27 versehenen Abschnitt ein sich konisch aufweitender Abschnitt 29 an, der in einen zylindrischen Abschnitt 30 übergeht, der Teil einer ersten Passung 31 bildet. An diesen zylindrischen Teil 30 schließt sich ein ebenfalls zylindrischer Abschnitt 32 an, der jedoch gegenüber dem zylindrischen Teil 30 abgesetzt ausgebildet ist, also einen kleineren Durchmesser aufweist. An den zylindrischen Abschnitt 32 schließt sich ein weiterer zylindrischer Abschnitt 33 an, der Teil einer zweiten Passung 34 bildet. Dieser zylindrische Abschnitt 33 weist einen größeren Durchmesser als der zylindrische Teil 30 der ersten Passung auf. Er ist darüber hinaus mit mehreren umlaufenden Nuten 35 versehen, welche Schmiernuten bilden. Von da an setzt sich die Welle mit im Wesentlichen gleichem zylindrischen Außenumfang fort bis zu einem Übergangsbereich 36, in dem sie konisch zulaufend in einen Keilwellenabschnitt 37 übergeht. In diesem Übergangsbereich sitzt ein Anschlagring 38, der ein axiales Widerlager für die Laufräder 10 bildet, die mittels des Keilwellenprofils drehfest auf dem Keilwellenabschnitt 37 gehalten sind und endseitig mittels einer Mutter 39 verspannt sind.

Wie insbesondere aus Fig. 3 ersichtlich ist, sitzt in Einbaulage der zylindrische Teil 30 der Pumpenwelle 9, der mit dem zylindrischen Abschnitt 28 des Sacklochs 24 einen Übergangspassung bildet, mittig in dem Bereich der Motorwelle 7, welcher das Kugellager 11 trägt. Der zylindrische Abschnitt 33 hingegen, der mit dem zylindrischen Abschnitt 28 des Sacklochs 24 eine Presspassung bildet, sitzt in dem Bereich des Sacklochs, der mit Abstand zum Kugellager 11 angeordnet ist. Die Verbindung der Wellen 7 und 9 erfolgt also in zwei Passungen, nämlich einer Übergangspassung 31 im Lagerbereich und einer Presspassung 34 nahe dem Ende der Motorwelle 7. Hierdurch wird einerseits eine ausreichend feste kraftschlüssige Verbindung gewährleistet, andererseits jedoch sichergestellt, dass der Lagersitz durch die darunter liegende Passung nicht beeinträchtigt wird, da es sich hierbei um eine Übergangspassung handelt. Dort hingegen, wo Verformungen auch am Außenumfang der Welle 9 nicht völlig ausgeschlossen werden können, nämlich dort, wo die Presspassung 34 sitzt, ist die Motorwelle 7 konstruktiv umbelastet, jedenfalls spielt eine mögliche und wenn auch nur minimale Verformung dort für die Tragfunktion des Schleuderrings 16 keine Rolle. Diese konstruktive Ausgestaltung verringert also die axiale Baulänge in diesem Bereich, vermeidet jedoch zuverlässig Probleme, die im Zusammenhang mit Passungen in diesem Bereich zu erwarten sind.

Der Bereich zwischen dem zylindrischen Abschnitt 33 und dem Übergangsbereich 36 dient zur Aufnahme der Gleitringdichtung 15.

Die Pumpenwelle 9, wie sie vorstehend beschrieben und in der Zeichnung dargestellt ist, kann am fertig montierten Motor 1 befestigt werden, ohne diesen unzulässig zu belasten. Die in Achsrichtung der Wellen 7, 9 gerichteten Fügekräfte zum Fügen der Übergangspassung 31 sowie der Presspassung 34 werden durch ein Drehmoment aufgebracht, welches zwischen der Motorwelle 7 und der Pumpenwelle 9 aufgebracht wird. Hierzu sind an diesen Wellen 7, 9 entsprechende Formschlussmittel vorgesehen. Die Wellen 7 und 9 werden zunächst axial aufeinander zu bewegt, bis der Führungszapfen 25 vollständig innerhalb des Gewindeabschnitts 26 liegt. Sodann wird das Drehmoment eingeleitet, welches dafür sorgt, dass sich das Außengewinde 27 der Welle 9 in den Gewindeabschnitt 26 des Sacklochs 24 der Motorwelle 7 eindreht. Entsprechend der Gewindesteigung werden die Wellen 7, 9 axial aufeinander zu bewegt. Dabei werden schließlich die zylindrischen Abschnitte 30 und 33 in den Bereich der Passungen 31 und 34 bewegt. Die größten Kräfte entstehen dabei im Bereich der Presspassung 34. Um diese in zulässigen Grenzen zu halten, sind die Schmiernuten 35 vorgesehen. Die bestimmungsgemäße Position ist erreicht, sobald der Führungszapfen 25 am Boden der Sacklochbohrung 24 anschlägt. Es wird dann zunächst das sich an den Lagerträger 5 anschließende Pumpengehäuseteil montiert, wonach die Gleitringdichtung 15, dann der Anschlagring 38 sowie die Laufräder montiert werden. Die weitere Montage der Pumpe erfolgt in üblicher Weise.

### Bezugszeichenliste

- 1: Motor
- 2: Motorgehäuse
- 3: Pumpe
- 4: Pumpengehäuse
- 5: Lagerträger
- 6: Rotor
- 7: Motorwelle
- 8: Lüfterrad
- 9: Pumpenwelle
- 10: Laufräder
- 11: Kugellager
- 12: Sauganschluss
- 13: Drehachse
- 14: Druckanschluss
- 15: Gleitringdichtung
- 16: Schleuderring
- 17: Wulst
- 18: Nut
- 19: Freiraum
- 20: Kanal
- 21: Freiraum
- 22: feststehender Dichtring
- 23: O-Ring
- 24: Sackloch
- 25: Führungszapfen
- 26: Gewindeabschnitt von 24
- 27: Außengewinde von 9
- 28: Zylindrischer Abschnitt von 24
- 29: konisch aufweitender Abschnitt von 9
- 30: zylindrischer Teil von 9
- 31: erste Passung, Überganspassung
- 32: zylindrischer Abschnitt von 9
- 33: zylindrischer Abschnitt von 9
- 34: zweite Passung, Presspassung
- 35: Schmiernuten
- 36: Übergangsbereich von 9
- 37: Keilwellenabschnitt von 9
- 38: Anschlagring
- 39: Mutter

## Patentansprüche

1. Mehrstufiges Kreiselpumpenaggregat mit einem Motorgehäuse (2) mit einer drehbar gelagerten Motorwelle (7), die einen Rotor (6) trägt, und mit einem Pumpengehäuse (4) mit einer drehbar gelagerten Pumpenwelle (9), auf welcher Laufräder (10) drehfest angeordnet sind, wobei das Pumpengehäuse (4) mit dem Motorgehäuse (2) und die Motorwelle (7) mit der Pumpenwelle (9) fest verbunden sind, und das motorseitige Ende der Pumpenwelle (9) innerhalb eines Sacklochs (24) am pumpenseitigen Ende der Motorwelle (7) festgelegt ist, und mit einem Lager (11) zur Wellenlagerung, das in einem im Anschlussbereich der Gehäuse (2, 4) vorgesehenem Lagerträger (5) angeordnet ist, **dadurch gekennzeichnet, dass** die Pumpenwelle (9) an oder nahe ihrem motorseitigen Ende ein Außengewinde (27) aufweist, dass in ein Innengewinde (26) des Sacklochs (24) eingreift, und dass mit Abstand in Richtung zum Laufrad (10) davon eine erste Passung (31) sowie davon beabstandet eine zweite Passung (34) zwischen Pumpenwelle (9) und Sackloch (24) vorgesehen sind.

2. Kreiselpumpenaggregat nach Anspruch 1, **dadurch gekennzeichnet, dass** die erste Passung (31) eine Übergangspassung ist.

3. Kreiselpumpenaggregat nach einem der vorhergehenden Ansprüche, **dadurch gekennzeichnet, dass** die zweite Passung (34) eine Presspassung ist.

4. Kreiselpumpenaggregat nach einem der vorhergehenden Ansprüche, **dadurch gekennzeichnet, dass** am motorseitigen Ende der Pumpenwelle (9) ein Führungszapfen (25) vorgesehen ist, der mit Spiel in dem entsprechend ausgebildeten Ende des Sacklochs (24) sitzt.

5. Kreiselpumpenaggregat nach einem der vorhergehenden Ansprüche, **dadurch gekennzeichnet, dass** die Pumpenwelle (9) von ihrem motorseitigen Außengewinde (27) zu dem Abschnitt (30), welcher Teil der ersten Passung (31) bildet, konisch aufweitend verläuft.

6. Kreiselpumpenaggregat nach einem der vorhergehenden Ansprüche, **dadurch gekennzeichnet, dass** die Pumpenwelle (9) im Bereich zwischen den Abschnitten (30, 33) für die erste und zweite Passung (31, 34) einen geringeren Durchmesser als in den Passungsabschnitten (30, 31) aufweist.

7. Kreiselpumpenaggregat nach einem der vorhergehenden Ansprüche, **dadurch gekennzeichnet, dass** die Pumpenwelle (9) im Bereich des Abschnitts (33) für die zweite Passung (34) mit umlaufenden Schmiernuten (35) versehen ist.

8. Kreiselpumpenaggregat nach einem der vorhergehenden Ansprüche, **dadurch gekennzeichnet, dass** die erste Passung (31) in dem Bereich der Motorwelle (7) angeordnet ist, die vom Lager (11) umgeben ist.

9. Kreiselpumpenaggregat nach einem der vorhergehenden Ansprüche, **dadurch gekennzeichnet, dass** die zweite Passung (34) in dem Bereich der Motorwelle (7) jenseits des Lagers (11) zur Pumpenseite hin angeordnet ist.

10. Kreiselpumpenaggregat nach einem der vorhergehenden Ansprüche, **dadurch gekennzeichnet, dass** auf der Pumpenwelle (9) unmittelbar vor dem pumpenseitigen Ende der Motorwelle (7) ein Schleuderring (16) angeordnet ist, der die Pumpenwelle (9) dicht umgreift und innerhalb eines Freiraums (19) des Lagerträgers (5) angeordnet ist, der über einen unten anschließenden Kanal (20) mit der Umgebung leitungsverbunden ist.

11. Kreiselpumpenaggregat nach einem der vorhergehenden Ansprüche, **dadurch gekennzeichnet, dass** der Schleuderring (16) einen etwa h-förmigen Querschnitt aufweist und mittels eines am pumpenseitigen Ende der Motorwelle (7) gebildeten Wulstes (17) formschlüssig rastend gehalten ist.

12. Kreiselpumpenaggregat nach einem der vorhergehenden Ansprüche, **dadurch gekennzeichnet, dass** das der Schleuderring (16) aus Kunststoff gebildet und gegenüber der Pumpenwelle (9) vorgespannt ist.

13. Kreiselpumpenaggregat nach einem der vorhergehenden Ansprüche, **dadurch gekennzeichnet, dass** im Lagerträger (5) zwischen Lager (11) und Schleuderring (16) ein feststehender Dichtring (22) vorgesehen ist, der radial gegenüber dem Lagerträger (5) mittels eines O-Rings (23) abgedichtet ist und der vorgespannt dichtend an der axialen Seite des mit der Welle (7, 9) mitdrehenden inneren Lagerrings läuft.

14. Kreiselpumpenaggregat nach einem der vorhergehenden Ansprüche, **dadurch gekennzeichnet, dass** der feststehende Dichtring (22) innerhalb des Freiraums (21) angeordnet ist, der über den Kanal (20) mit der Umgebung leitungsverbunden ist.

## Claims

1. A multi-stage centrifugal pump assembly with a motor housing (2) with a motor shaft (7) which is rotatably mounted and which carries a rotor (6), and with a pump housing (4) with a rotatably mounted pump shaft (9), on which impellers (10) are arranged in a rotationally fixed manner, wherein the pump housing (4) is fixedly connected to the motor housing (2), and the motor shaft (7) fixedly connected to the pump shaft (9), and the motor-side end of the pump shaft (9) is fixed within a pocket hole (24) at the pump-side end of the motor shaft (7), and with a bearing (11) for the shaft mounting, which is arranged in a bearing carrier (5) provided in the connection region of the housing (2, 4), **characterised in that** the pump shaft (9) comprises an outer thread (27) on or near to its motor-side end, said outer thread meshing into an inner thread (26) of the pocket hole (24), and, that distanced to this outer thread in the direction to the impeller (10), a first fit (31) as well as distanced to this, a second fit (34), are provided between the pump shaft (9) and the pocket hole (24).

2. A centrifugal pump assembly according to claim 1, **characterised in that** the first fit (31) is a transition fit.

3. A centrifugal pump assembly according to one of the preceding claims, **characterised in that** the second fit (34) is a press fit.

4. A centrifugal pump assembly according to one of the preceding claims, **characterised in that** a guide peg (25) is provided at the motor-side end of the pump shaft (9) and is seated with play in the correspondingly formed end of the pocket hole (24).

5. A centrifugal pump assembly according to one of the preceding claims, **characterised in that** the pump shaft (9) runs in a conically widening manner from its motor-side outer thread (27) to the section (30) which forms part of the first fit (31).

6. A centrifugal pump assembly according to one of the preceding claims, **characterised in that** the pump shaft (9) in the region between the sections (30, 33) for the first and the second fit (31, 34), has a smaller diameter than in the fit sections (30, 31).

7. A centrifugal pump assembly according to one of the preceding claims, **characterised in that** the pump shaft (9) is provided with peripheral lubrication grooves (35) in the region of the section (33) for the second fit (34).

8. A centrifugal pump assembly according to one of the preceding claims, **characterised in that** the first fit (31) is arranged in the region of the motor shaft (7), which is surrounded by the bearing (11).

9. A centrifugal pump assembly according to one of the preceding claims, **characterised in that** the second fit (34) is arranged in the region of the motor shaft (7) on the other side of the bearing (11) towards the pump side.

10. A centrifugal pump assembly according to one of the preceding claims, **characterised in that** a slinger ring (16) is arranged on the pump shaft (9) directly in front of the pump-side end of the motor shaft (7) and encompasses the pump shaft (9) in a tight manner and is arranged within a free space (19) of the bearing carrier (5), which is conductively connected to the surroundings via a channel (20) connected at the bottom.

11. A centrifugal pump assembly according to one of the preceding claims, **characterised in that** the slinger ring (16) has a roughly h-shaped cross section, and is held in a locking manner with a positive fit by way of a bead (17) formed at the pump-side end of the motor shaft (7).

12. A centrifugal pump assembly according to one of the preceding claims, **characterised in that** the slinger ring (16) is formed of plastic and is biased with respect to the pump shaft (9).

13. A centrifugal pump assembly according to one of the preceding claims, **characterised in that** a stationary sealing ring (22) is provided in the bearing carrier (5) between the bearing (11) and the slinger ring (16), and is radially sealed with respect to the bearing carrier (5) by way of an O-ring (23), and in a biased manner runs sealingly on the axial side of the inner bearing ring which co-rotates with the shaft (7, 9).

14. A centrifugal pump assembly according to one of the preceding claims, **characterised in that** the stationary sealing ring (22) is arranged within the free space (21), which is conductively connected to the surroundings via the channel (20).

## Revendications

1. Groupe motopompe centrifuge à plusieurs étages, avec un carter de moteur (2) avec un arbre de moteur (7) monté à rotation qui porte un rotor (6), et avec un carter de pompe (4) avec un arbre de pompe (9) monté à rotation sur lequel arbre sont disposés, de façon solidaire en rotation, des roues à aubes (10), le carter de pompe (4) étant attaché de façon fixe au carter de moteur (2) et l'arbre de moteur (7) étant attaché de façon fixe à l'arbre de pompe (9), et l'extrémité côté moteur de l'arbre de pompe (9) étant fixé dans un trou borgne (24) à l'extrémité côté pompe de l'arbre de moteur (7), et avec un palier (11) pour supporter un arbre, qui est disposé dans un support de palier (5) prévu dans une zone de raccordement des carters (2, 4), **caractérisé en ce que** l'arbre de pompe (9) comprend, à ou proche de son extrémité côté moteur, un filetage (27) qui est engagé dans un taraudage (26) du trou borgne (24) et **en ce que** sont prévus, à une distance de celui-ci en direction de la roue à aubes (10), un premier ajustement (31) et, espacé de celui-ci, un second ajustement (34) entre l'arbre de pompe (9) et le trou borgne (24).

2. Groupe motopompe centrifuge selon la revendication 1, **caractérisé en ce que** le premier ajustement (31) est un ajustement de transition.

3. Groupe motopompe centrifuge selon l'une des revendications précédentes, **caractérisé en ce que** le second ajustement (34) est un ajustement serré.

4. Groupe motopompe centrifuge selon l'une des revendications précédentes, **caractérisé en ce qu'**est prévu, à l'extrémité côté moteur de l'arbre de pompe (9), un tourillon de guidage (25) qui est inséré avec un jeu dans l'extrémité formée de façon appropriée du trou borgne (24).

5. Groupe motopompe centrifuge selon l'une des revendications précédentes, **caractérisé en ce que** l'arbre de pompe (9) s'étend coniquement évasant de son filetage (27) du côté moteur à une zone (30) qui fait partie du premier ajustement (31).

6. Groupe motopompe centrifuge selon l'une des revendications précédentes, **caractérisé en ce que** l'arbre de pompe (9) présente, dans la zone entre les parties (30, 33) pour le premier et le second ajustement (31, 34), un diamètre plus faible que dans les parties (30, 31) pour les ajustements.

7. Groupe motopompe centrifuge selon l'une des revendications précédentes, **caractérisé en ce que** l'arbre de pompe (9) est pourvu, dans la zone de la partie (33) pour le second ajustement (34), de rainures de lubrification (35) périphériques.

8. Groupe motopompe centrifuge selon l'une des revendications précédentes, **caractérisé en ce que** le premier ajustement (31) est disposé dans la zone de l'arbre de moteur (7) qui est entourée du palier (11).

9. Groupe motopompe centrifuge selon l'une des revendications précédentes, **caractérisé en ce que** le second ajustement (34) est disposé dans la zone de l'arbre de moteur (7) qui est située au-delà du palier (11) vers le côté pompe.

10. Groupe motopompe centrifuge selon l'une des revendications précédentes, **caractérisé en ce qu'**un déflecteur (16) est disposé sur l'arbre de pompe (9) directement avant l'extrémité du côté pompe de l'arbre de moteur (7), qui entoure l'arbre de pompe (9) de manière étanche et est disposé dans un espace vide (19) du support de palier (5) qui est relié par conduit à l'environnement via un canal (20) raccordé en-dessous.

11. Groupe motopompe centrifuge selon l'une des revendications précédentes, **caractérisé en ce que** le déflecteur (16) présente une section transversale approximativement en forme de h et est maintenu à verrouillage, en complémentarité de forme, à l'aide d'un bourrelet (17) formé à l'extrémité du côté pompe de l'arbre de moteur (7).

12. Groupe motopompe centrifuge selon l'une des revendications précédentes, **caractérisé en ce que** le déflecteur (16) est formé en matière synthétique et est précontraint par rapport à l'arbre de pompe (9).

13. Groupe motopompe centrifuge selon l'une des revendications précédentes, **caractérisé en ce qu'**est prévu, dans le support de palier (5) entre le palier (11) et le déflecteur (16), un joint d'étanchéité (22) immobile qui est rendu radialement étanche par rapport au support de palier (5) par un joint torique (23) et qui glisse, de façon à rendre étanche par précontrainte, sur le côté axial de la bague de palier intérieure solidaire en rotation avec l'arbre (7, 9).

14. Groupe motopompe centrifuge selon l'une des revendications précédentes, **caractérisé en ce que** le joint d'étanchéité (22) immobile est disposé à l'intérieur de l'espace vide (21) qui est relié par conduit à l'environnement via le canal (20).
